# EUROPÄISCHE PATENTANMELDUNG

(11) **EP 4 070 695 A1**
(43) Veröffentlichungstag der Anmeldung: **12.10.2022**
(21) Anmeldenummer: 22163472.8
(22) Anmeldetag: 22.03.2022
(51) Int. Cl.: A47J 27/00, A47J 36/32, A47J 36/00, A47J 36/36

(54) **KÜCHENUTENSIL ZUM AUFSTELLEN AUF EIN INDUKTIONSKOCHFELD, VERFAHREN ZUM BETRIEB DES KÜCHENUTENSILS, VERFAHREN ZUM BETRIEB DER INNENSCHALE DES KÜCHENUTENSILS UND VERFAHREN ZUM BETRIEB EINES SYSTEMS**

(30) Priorität: 07.04.2021 DE 102021108578
(71) Anmelder: Miele & Cie. KG, 33332 Gütersloh (DE)
(72) Erfinder: Ennen, Volker, 32257 Bünde (DE); Holtmann, Frank, 32120 Hiddenhausen (DE); Schridde, Timo, 33607 Bielefeld (DE)

(57) **Zusammenfassung**

Die Erfindung betrifft ein Küchenutensil (2) zum Aufstellen auf ein Induktionskochfeld (4), umfassend eine Innenschale (6) und eine von der Innenschale (6) durch einen Zwischenraum (10) beabstandete Außenschale (12), wobei die Innenschale (6) und die Außenschale (12) zueinander korrespondierende mechanische Verbindungsmittel (16, 18, 20, 22) zur mechanischen Verbindung der Innenschale (6) mit der Außenschale (12) in einer mechanischen Verbindungslage des Küchenutensils (2) aufweisen und das Küchenutensil (2) derart ausgebildet ist, dass die Innenschale (6) bei auf dem Induktionskochfeld (4) aufgestellten Küchenutensil (2) mittels einer Induktionsspule des Induktionskochfelds (4) erwärmbar ist, dadurch gekennzeichnet, dass die Innenschale (6) und die Außenschale (12) jeweils mindestens ein elektrisches Bauteil (28, 34, 36, 38, 40; 28, 34, 36, 38, 40, 48; 28, 36, 40) umfassen, wobei die Innenschale (6) und die Außenschale (12) zueinander korrespondierende elektrische Verbindungsmittel zur zumindest teilweisen drahtlosen oder drahtgebundenen elektrischen Verbindung der elektrischen Bauteile (28, 34, 36, 38, 40; 28, 34, 36, 38, 40, 48; 28, 36, 40) der Innenschale (6) und der Außenschale (12) in einer elektrischen Verbindungslage des Küchenutensils (2) aufweisen.

## Beschreibung

Die Erfindung betrifft ein Küchenutensil zum Aufstellen auf ein Induktionskochfeld der im Oberbegriff des Patentanspruchs 1 genannten Art, ein Verfahren zum Betrieb des Küchenutensils, ein Verfahren zum Betrieb der Innenschale des Küchenutensils und ein Verfahren zum Betrieb eines Systems.

Derartige Küchenutensilien, beispielsweise Kochtöpfe, Bratpfannen oder dergleichen, und Verfahren zu deren Betrieb sind aus dem Stand der Technik in einer Vielzahl von Ausführungsformen bereits vorbekannt. Die bekannten Küchenutensilien umfassen beispielsweise eine Innenschale mit einem Innenboden und eine von der Innenschale durch einen Zwischenraum beabstandete Außenschale mit einem Außenboden, wobei die Innenschale und die Außenschale zueinander korrespondierende mechanische Verbindungsmittel zur mechanischen Verbindung der Innenschale mit der Außenschale in einer mechanischen Verbindungslage des Küchenutensils aufweisen und das Küchenutensil derart ausgebildet ist, dass die Innenschale bei auf dem Induktionskochfeld aufgestellten Küchenutensil mittels einer Induktionsspule des Induktionskochfelds erwärmbar ist.

Siehe hierzu beispielsweise die DE 10 2017 114 943 A1 aus der ein Kochgeschirr zur Verwendung mit einem Induktionskochfeld bekannt ist. Das Kochgeschirr weist einen Körper mit einem Boden, mit einem Wandbereich und mit einem Übergangsbereich zwischen dem Boden und dem Wandbereich auf, wobei der Boden ausgebildet ist, auf einer Kochstelle des Induktionskochfelds angeordnet und von einer Induktionsspule der Kochstelle induktiv erwärmt zu werden, und wobei der Boden wenigstens eine erste Schicht mit einer Curie-Temperatur aufweist. Der Wandbereich und/oder der Übergangsbereich sind/ist aus einem Material hergestellt, welches eine geringere magnetische Permeabilität als das Material der ersten Schicht des Bodens aufweist. In einer Ausführungsform weist dieses Kochgeschirr insgesamt drei Schichten auf, wobei auf die vorgenannte erste Schicht auf der dem Induktionskochfeld abgewandten Seite der ersten Schicht eine als wärmeleitende Schicht ausgebildete zweite Schicht und auf diese zweite Schicht eine als nicht magnetisierbare Schicht ausgebildete dritte Schicht folgt.

Ausgehend von dem bekannten Stand der Technik stellt sich der Erfindung somit das Problem, ein Küchenutensil zum Aufstellen auf ein Induktionskochfeld, ein Verfahren zum Betrieb des Küchenutensils, ein Verfahren zum Betrieb der Innenschale des Küchenutensils und ein Verfahren zum Betrieb eines Systems zu verbessern.

Erfindungsgemäß wird dieses Problem durch ein Küchenutensil mit den Merkmalen des Patentanspruchs 1 gelöst, das dadurch gekennzeichnet ist, dass die Innenschale und die Außenschale jeweils mindestens ein elektrisches Bauteil umfassen, wobei die Innenschale und die Außenschale zueinander korrespondierende elektrische Verbindungsmittel zur zumindest teilweisen drahtlosen oder drahtgebundenen elektrischen Verbindung der elektrischen Bauteile der Innenschale und der Außenschale in einer elektrischen Verbindungslage des Küchenutensils aufweisen. Ferner wird dieses Problem durch ein Verfahren mit den Merkmalen des Patentanspruchs 9, ein Verfahren mit den Merkmalen des Patentanspruchs 11 und ein Verfahren mit den Merkmalen des Patentanspruchs 12 gelöst. Unter der zumindest teilweisen elektrischen Verbindung der elektrischen Bauteile der Innenschale und der Außenschale ist hier gemeint, dass zumindest ein Teil des mindestens einen elektrischen Bauteils der Innenschale in der elektrischen Verbindungslage des erfindungsgemäßen Küchenutensils mit zumindest einem Teil des mindestens einen elektrischen Bauteils der Außenschale mittelbar oder unmittelbar elektrisch leitend verbunden ist. Entsprechend müssen erfindungsgemäß nicht alle elektrischen Bauteile der Innenschale und der Außenschale in der elektrischen Verbindungslage des Küchenutensils miteinander elektrisch leitend verbunden sein. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Küchenutensil zum Aufstellen auf ein Induktionskochfeld, ein Verfahren zum Betrieb des Küchenutensils, ein Verfahren zum Betrieb der Innenschale des Küchenutensils und ein Verfahren zum Betrieb eines Systems verbessert sind. Aufgrund der erfindungsgemäßen Ausbildung des Küchenutensils, des Verfahrens zum Betrieb des Küchenutensils, des Verfahrens zum Betrieb der Innenschale des Küchenutensils und des Verfahrens zum Betrieb eines Systems ist es möglich, dass die Außenschale des Küchenutensils, insbesondere der Außenboden des Küchenutensils, im Vergleich zu der Innenschale des Küchenutensils auch bei einem Betrieb des Küchenutensils eine deutlich niedrigere Temperatur als die Innenschale des Küchenutensils aufweist. Erfindungsgemäß ist somit ein gedämmtes Küchenutensil auf konstruktiv und fertigungstechnisch einfache Art und Weise realisierbar, ohne, dass dadurch die induktive Kopplung zwischen der Induktionsspule des Induktionskochfelds auf der einen Seite und der induktiven Heizvorrichtung des erfindungsgemäßen Küchenutensils auf der anderen Seite bei auf dem Induktionskochfeld aufgestellten Küchenutensil wesentlich beeinträchtigt wird. Darüber hinaus ist das erfindungsgemäße Küchenutensil auch bei üblichen Induktionskochfeldern einsetzbar, so dass kein spezielles Induktionskochfeld, beispielsweise mit einem auf das erfindungsgemäße Küchenutensil speziell angepassten Schwingkreis, erforderlich ist. Ferner sind mittels der erfindungsgemäßen Ausbildung des Küchenutensils die Lebensdauer eines Generators der Induktionsspule des Induktionskochfelds sowie die Messgenauigkeit einer etwaigen Küchenutensilpositionsund/oder Küchenutensilgrößenbestimmung, trotz gedämmten Küchenutensil, im Wesentlichen nicht negativ beeinflusst. Die Erfindung ist insbesondere bei sogenannten vollintegrierten Kochfeldern mit empfindlichen Arbeitsplatten oder beim Abstellen des Küchenutensils auf empfindliche Oberflächen, wie beispielsweise auf Tischen ohne Untersetzer oder dergleichen, vorteilhaft einsetzbar. Insbesondere vorteilhaft ist es, wenn die Außenschale gleichzeitig als eine thermische Dämmung ausgebildet ist. Zur Verbesserung der thermischen Dämmung des Küchenutensils kann der Zwischenraum zwischen der Innenschale und der Außenschale alternativ oder zusätzlich zumindest teilweise mit einem thermischen Dämmstoff, beispielsweise einem thermischen Dämmelement, ausgefüllt sein. Denkbar ist auch, dass der Zwischenraum zwecks thermischer Isolierung zumindest teilweise mit einem thermisch isolierenden Gas, beispielsweise Luft, gefüllt oder evakuiert ist. Ferner ist mittels der Erfindung ein modulares Konzept für das erfindungsgemäße Küchenutensil ermöglicht, mittels dem die Innenschale beispielsweise mit einer aus einer Vielzahl von voneinander verschiedenen Außenschalen ausgewählten Außenschale mechanisch und elektrisch verbindbar ist. Aufgrund der zumindest teilweisen drahtlosen oder drahtgebundenen elektrischen Verbindung der elektrischen Bauteile der Innenschale und der Außenschale in einer elektrischen Verbindungslage des Küchenutensils sind darüber hinaus Betriebsmöglichkeiten bei einem Betrieb des erfindungsgemäßen Küchenutensils eröffnet, die beispielsweise bei einer separaten Nutzung des mindestens einen elektrischen Bauteils der Innenschale einerseits und des mindestens einen elektrischen Bauteils der Außenschale andererseits nicht möglich sind. So können beispielsweise bereits vorhandene Temperatursensoren der Innenschale zur Erfassung von Temperaturen der Innenschale und zur Ermittlung mindestens einer Temperatur eines in der Innenschale befindlichen Garguts, einem Wasservolumen oder dergleichen, durch weitere Temperatursensoren in der, beispielsweise nachrüstbaren, Außenschale ergänzt werden. Beispielhaft kann ein derartiger zusätzlicher Temperatursensor unter oder in dem Außenboden der Außenschale angeordnet sein und für die Sicherstellung der Einhaltung von maximalen Temperaturen des Außenbodens zum Schutz von beispielsweise als Arbeitsplatten mit vollintegrierten Induktionskochfeldern ausgebildeten Induktionskochfeldern genutzt werden. Die vorgenannten Ausführungen zu den Temperatursensoren sind jedoch rein exemplarisch. Entsprechend ist das damit beispielhaft erläuterte Konzept auf eine Vielzahl von voneinander verschiedenen elektrischen Bauteilen des erfindungsgemäßen Küchenutensils und auf eine Vielzahl von voneinander verschiedenen Betriebsweisen dieser elektrischen Bauteile verallgemeinerbar.

Grundsätzlich ist das erfindungsgemäße Küchenutensil zum Aufstellen auf ein Induktionskochfeld nach Art, Funktionsweise, Material und Dimensionierung in weiten geeigneten Grenzen frei wählbar. Siehe hierzu beispielsweise die diesbezüglichen Ausführungen in der Beschreibungseinleitung.

Eine vorteilhafte Weiterbildung des erfindungsgemäßen Küchenutensils sieht vor, dass die zueinander korrespondierenden mechanischen Verbindungsmittel zur lösbaren mechanischen Verbindung der Innenschale und der Außenschale ausgebildet sind, bevorzugt, dass die zueinander korrespondierenden mechanischen Verbindungsmittel zumindest teilweise an dem Innenboden und an dem Außenboden angeordnet sind, besonders bevorzugt, dass die an dem Innenboden angeordneten mechanischen Verbindungsmittel an einer an dem Innenboden mittelbar oder unmittelbar befestigten Verbindungsplatte angeordnet sind. Auf diese Weise ist die Außenschale auch als nachrüstbare Außenschale verwendbar. Ferner ist dadurch ein Austausch vor Ort, beispielsweise durch einen Kundendienstmitarbeiter oder den Kunden selbst, ermöglicht. Darüber hinaus ist das erfindungsgemäße Küchenutensil gemäß der vorliegenden Weiterbildung, auch nachträglich, sehr einfach auf sich wandelnde Designwünsche und/oder Technikwünsche anpassbar.

Eine vorteilhafte Weiterbildung der vorgenannten Weiterbildung des erfindungsgemäßen Küchenutensils sieht vor, dass die zueinander korrespondierenden mechanischen Verbindungsmittel zumindest teilweise an einer Innenwand der Innenschale und an einer der Innenwand gegenüberliegend angeordneten Außenwand der Außenschale, bevorzugt an einem freien Innenrand der Innenschale und an einem freien Außenrand der Außenschale und/oder an mindestens einem Griff des Küchenutensils und an einem zu dem Griff korrespondierenden mindestens einen Griffbefestigungselement, angeordnet sind. Hierdurch ist es möglich, die Außenschale mit der Innenschale je nach den Erfordernissen des Einzelfalls in der mechanischen Verbindungslage des Küchenutensils geeignet zu verbinden. Besonders vorteilhaft ist diese Weiterbildung beispielsweise bei der mechanischen Verbindung einer großvolumigen Außenschale mit der Innenschale.

Eine besonders vorteilhafte Weiterbildung des erfindungsgemäßen Küchenutensils sieht vor, dass die mechanischen und elektrischen Verbindungsmittel derart ausgebildet und angeordnet sind, dass die mechanische und die elektrische Verbindungslage während einer Fertigung des Küchenutensils in einem einzigen Fertigungsschritt herstellbar sind, bevorzugt, dass die elektrische Verbindungslage der mechanischen Verbindungslage entspricht. Auf diese Weise ist die Fertigung des erfindungsgemäßen Küchenutensils wesentlich vereinfacht. Auch eine nachträgliche Erweiterung einer Innenschale mit einer Außenschale zu dem erfindungsgemäßen Küchenutensil, beispielsweise vor Ort durch einen Kundendienstmitarbeiter oder einen Benutzer, ist hierdurch sehr erleichtert.

Eine weitere vorteilhafte Weiterbildung des erfindungsgemäßen Küchenutensils sieht vor, dass die zueinander korrespondierenden mechanischen Verbindungsmittel zumindest teilweise als auf Magnetkraft basierende Verbindungsmittel und/oder als auf Vakuum basierende Verbindungsmittel, bevorzugt als auf ein in dem Zwischenraum ausgebildetes Vakuum basierende Verbindungsmittel, und/oder als auf Klebekraft basierende Verbindungsmittel ausgebildet sind. Hierdurch ist es beispielsweise möglich, bei dem erfindungsgemäßen Küchenutensil bereits aus anderen funktionalen Gründen vorhandene Ausbildungen des erfindungsgemäßen Küchenutensils gleichzeitig auch für die mechanische Verbindung der Innenschale mit der Außenschale zu verwenden. Entsprechend sind hierdurch Synergieeffekte nutzbar. Beispielsweise kann die Innenschale zumindest teilweise aus einem magnetischen Material ausgebildet sein, so dass sich die Magnetkraft für die vorgenannte mechanische Verbindung anbietet. Sofern der Zwischenraum zwecks einer verbesserten thermischen Isolierung der Außenschale von der Innenschale evakuiert ist, ist es möglich, dieses Vakuum gleichzeitig für die vorgenannte mechanische Verbindung zu verwenden.

Eine andere vorteilhafte Weiterbildung des erfindungsgemäßen Küchenutensils sieht vor, dass das mindestens eine elektrische Bauteil der Innenschale und/oder das mindestens eine elektrische Bauteil der Außenschale als ein elektrisches Bauteil aus der nachfolgenden Gruppe ausgewählt ist: Elektronik zur Steuerung oder Regelung des Küchenutensils, Elektronik zur Aufnahme und/oder Verarbeitung und/oder Übermittlung von Messwerten und/oder Daten und/oder Steuer- und/oder Regelparametern, Sensor zur Erfassung eines Küchenutensilparameters des Küchenutensils, Induktionsspule zur Erwärmung eines in der Innenschale befindlichen Garguts mittels eines Wärmeerzeugungselements, Induktionsspule zur Energieversorgung einer Elektronik des Küchenutensils, Spule oder Antenne zur Signalübertragung zwischen der Innenschale und der Außenschale und/oder zwischen dem Küchenutensil und dem Induktionskochfeld. Bei den vorgenannten elektrischen Bauteilen handelt es sich jeweils um für den Betrieb des erfindungsgemäßen Küchenutensils und/oder für den Betrieb des Induktionskochfelds, auf dem das erfindungsgemäße Küchenutensil aufgestellt und mit dem das Induktionskochfeld signalübertragend verbunden ist, besonders wichtige elektrische Bauteile. Anstelle eines als Temperatursensor ausgebildeten Sensors sind alternativ oder zusätzlich auch andere Sensoren, beispielsweise ein Vibrationssensor zur Erfassung einer Vibration der Innenschale, denkbar. Selbstverständlich ist die vorgenannte Spule oder Antenne zur Signalübertragung zwischen dem erfindungsgemäßen Küchenutensil und dem Induktionskochfeld auch zur Signalübertragung zwischen dem erfindungsgemäßen Küchenutensil und einem Drittgerät, beispielsweise einem Smartphone oder einem Server, also einer sogenannten Cloud, geeignet ausbildbar und nutzbar. Das elektrische Bauteil kann ferner auch als eine vollständige Elektronik des erfindungsgemäßen Küchenutensils ausgebildet sein. Jedoch sind auch Ausführungsformen möglich, bei denen die Elektronik des erfindungsgemäßen Küchenutensils beispielsweise zum einen an oder in einem Griff des erfindungsgemäßen Küchenutensils und zum anderen an oder in der Außenschale angeordnet ist.

Eine weitere vorteilhafte Weiterbildung des erfindungsgemäßen Küchenutensils sieht vor, dass zwischen dem Innenboden und dem Außenboden mit Abstand zu der Außenschale eine induktive Heizvorrichtung wärmeleitend an dem Innenboden angeordnet ist, wobei die induktive Heizvorrichtung in einer Aufstelllage des Küchenutensils auf dem Induktionskochfeld mittelbar und/oder unmittelbar mit einer Induktionsspule des Induktionskochfelds induktiv koppelbar ist, bevorzugt, dass die induktive Heizvorrichtung eine mit dem Innenboden wärmeleitend verbundene Wärmeverteilschicht und eine auf der dem Innenboden abgewandten Seite der Wärmeverteilschicht an der Wärmeverteilschicht wärmeleitend angeordnete und zu dem Außenboden beabstandete Wärmeerzeugungsschicht aufweist, wobei die Wärmeerzeugungsschicht in der Aufstelllage des Küchenutensils auf dem Induktionskochfeld mittelbar und/oder unmittelbar mit einer Induktionsspule des Induktionskochfelds induktiv koppelbar ist. Auf diese Weise ist die thermische Isolierung des erfindungsgemäßen Küchenutensils zusätzlich verbessert und damit insbesondere eine ungewünschte übermäßige Erwärmung einer unter dem erfindungsgemäßen Küchenutensil befindlichen Aufstellfläche, beispielsweise eines vollintegrierten Induktionskochfelds, wirksam verhindert.

Eine vorteilhafte Weiterbildung der vorgenannten Ausführungsform des erfindungsgemäßen Küchenutensils sieht vor, dass an der Außenschale und/oder in dem Zwischenraum mindestens ein Ferritkörper zur mittelbaren induktiven Kopplung der induktiven Heizvorrichtung mit einer Induktionsspule des Induktionskochfelds in einer Aufstelllage des Küchenutensils auf dem Induktionskochfeld angeordnet ist. Mittels des beispielsweise in einem Bodenbereich des erfindungsgemäßen Küchenutensils, also in dem Zwischenraum zwischen Innenboden und Außenboden, angeordneten Ferritkörper ist eine magnetische Kopplung der induktiven Heizvorrichtung an die Induktionsspule des Induktionskochfelds verbessert.

Eine vorteilhafte Weiterbildung des erfindungsgemäßen Verfahrens zum Betrieb des Küchenutensils sieht vor, dass miteinander elektrisch verbundene elektrische Bauteile der Innenschale und der Außenschale mittels der Elektronik des Küchenutensils derart angesteuert werden, dass die miteinander elektrisch verbundenen elektrischen Bauteile zumindest teilweise in Kombination miteinander betrieben werden und/oder zumindest teilweise zum einen aktiviert und zum anderen deaktiviert werden. Hierdurch ist es beispielsweise möglich, elektrische Bauteile, wie beispielsweise eine an der Innenschale angeordnete Induktionsspule, durch zusätzliche, gleichartige elektrische Bauteile, wie beispielsweise eine weitere Induktionsspule, in der Außenschale zu ergänzen oder zu ersetzen. So kann beispielsweise bei dem Anschluss der vorgenannten weiteren Induktionsspule der Außenschale mittels der Elektronik des erfindungsgemäßen Küchenutensils die an der Innenschale angeordnete Induktionsspule deaktiviert werden. Alternativ können aber auch beide vorgenannten Induktionsspulen zusammengeschaltet und gemeinsam genutzt werden.

Wenn das Vorhandensein der mechanischen und/oder elektrischen Verbindungslage mittels der Elektronik des erfindungsgemäßen Küchenutensils detektiert worden ist, wird das erfindungsgemäße Küchenutensil mit der Innenschale mittels der Elektronik des Küchenutensils in einem ersten Betriebsmodus betrieben. Wenn das Vorhandensein der mechanischen und/oder elektrischen Verbindungslage jedoch nicht detektiert worden ist, also wenn lediglich die Innenschale auf das Induktionskochfeld aufgestellt worden ist, wird diese Innenschale dann mittels einer Elektronik der Innenschale ohne die Außenschale in einem zweiten Betriebsmodus betrieben. So ist es möglich, das Vorhandensein beispielsweise einer zusätzlichen Induktionsspule, zusätzlicher Sensoren oder zusätzlicher Antennen mittels der Elektronik des erfindungsgemäßen Küchenutensils automatisch zu detektieren. Dies kann als Hinweis auf das Vorhandensein einer Außenschale gewertet werden, so dass die Elektronik des erfindungsgemäßen Küchenutensils automatisch in einen ersten Betriebsmodus versetzt wird. Alternativ kann dieser erste Betriebsmodus beispielsweise manuell über eine Ein- und Ausgabeeinheit des erfindungsgemäßen Küchenutensils, mittels eines drahtlosen Signals beispielsweise eines Smartphones, mittels einer am Induktionskochfeld vorgenommenen und drahtlos an das erfindungsgemäße Küchenutensil übertragenen Einstellung oder mittels einer, zum Beispiel in der Fertigung über Kontakte oder drahtlos vorgenommenen, Einstellung eingestellt werden. Eine weitere Möglichkeit besteht darin, dass das Induktionskochfeld eine beispielsweise durch einen veränderten Abstand zwischen der Induktionsspule des erfindungsgemäßen Küchenutensils und/oder eines Vorhandenseins zusätzlicher Induktionsspulen im erfindungsgemäßen Küchenutensil veränderte Charakteristik der induktiven Ankopplung des erfindungsgemäßen Küchenutensils automatisch detektiert und, gegebenenfalls nach Bestätigung durch einen Benutzer des erfindungsgemäßen Systems, im erfindungsgemäßen Küchenutensil den ersten Betriebsmodus automatisch einstellt. Eine Messung der Induktivität von für ein sogenanntes Energy Harvesting eingesetzten Induktionsspulen des erfindungsgemäßen Küchenutensils durch die Elektronik des erfindungsgemäßen Küchenutensils kann ebenfalls einen Hinweis auf das Vorhandensein einer weiteren für das Energy Harvesting eingesetzten Induktionsspule des erfindungsgemäßen Küchenutensils, nämlich in der Außenschale, geben und zur automatischen Umschaltung von dem zweiten Betriebsmodus, der auf den alleinigen Betrieb der Innenschale ohne die Außenschale angepasst ist, in den ersten Betriebsmodus genutzt werden. Wenn sich das erfindungsgemäße Küchenutensil in dem ersten Betriebsmodus befindet, ist beispielsweise eine automatische Anpassung der Regelungstechnik in der Elektronik des erfindungsgemäßen Küchenutensils möglich. Dabei erfolgt eine Umstellung der Regelalgorithmen, um zum Beispiel eine veränderte Temperaturverteilung in der Innenschale mit mehreren Temperatursensoren oder eine aufgrund des Vorhandenseins der Außenschale verringerte Energieabgabe an die freie Umgebung zu berücksichtigen. Des Weiteren ist es möglich, auch bei der küchenutensilinternen Kommunikation und/oder bei einer Kommunikation des Küchenutensils mit dem Induktionskochfeld oder einem Drittgerät, beispielsweise einem Smartphone, zwischen dem zweiten Betriebsmodus ohne die Übermittlung von bestimmten Daten, wie zum Beispiel für Messdaten eines Temperatursensors an der Unterseite der Außenschale, und dem ersten Betriebsmodus mit der Übermittlung derartiger Daten umzuschalten.

Insbesondere, wenn die Auswertung von Sensordaten und die Berechnung der daraus resultierenden Leistungen für das Induktionskochfeld erfolgen, kann das erfindungsgemäße Küchenutensil dessen Status automatisch an das Induktionskochfeld übermitteln. Zum Beispiel, wenn sich das Küchenutensil in dem ersten Betriebsmodus befindet. Hierbei kann beispielsweise durch eine diesbezügliche Anpassung eines an das Induktionskochfeld gesendeten Beschreibungs-Flags des erfindungsgemäßen Küchenutensils, einer Anpassung einer Identifikationsnummer des erfindungsgemäßen Küchenutensils oder einem dedizierten Datenelement zur Beschreibung der Außenschale, beispielsweise dessen thermische Dämmung, an das Induktionskochfeld, insbesondere an die Elektronik des Induktionskochfelds übermittelt werden. Die Berechnung erfolgt vorzugsweise in der Elektronik des erfindungsgemäßen Küchenutensils, kann aber auch in der Elektronik des Kochfeldes durchgeführt werden.

Durch einen Empfang eines entsprechenden Datenpakets kann das Induktionskochfeld dann beispielsweise in einen auf den Betrieb von temperaturbegrenzten Gargeschirr optimierten Modus, nämlich den ersten Betriebsmodus des Induktionskochfelds, automatisch umgeschaltet werden. Dabei kann zum Beispiel der Regelalgorithmus, wie oben anhand des erfindungsgemäßen Küchenutensils bereits beschrieben, auch bei dem Induktionskochfeld entsprechend angepasst werden. Es ist auch möglich, beispielsweise an den höheren Abstand zwischen der Induktionsspule des Induktionskochfelds und der Induktionsspule des erfindungsgemäßen Küchenutensils angepasste Parameter für den Betrieb eines Generators der Induktionsspule des Induktionskochfelds zu verwenden oder eine maximale Leistungsabgabe an das erfindungsgemäße Küchenutensil anzupassen. Darüber hinaus können angepasste Parameter für die Empfindlichkeit der Küchenutensilpositionserkennung oder der Küchenutensilgrößenerkennung für das erfindungsgemäße Küchenutensil verwendet werden. Des Weiteren kann eine Routine für die Auswertung einer Unterseitentemperatur des erfindungsgemäßen Küchenutensils in der Elektronik des Induktionskochfelds automatisch gestartet werden.

Bestimmte Induktionskochfelder, zum Beispiel bestimmte vollintegrierte Induktionskochfelder, können, zum Beispiel aufgrund einer maximal für eine Arbeitsplattenoberfläche erlaubten Temperatur, den Betrieb oder den Betrieb mit voller Leistung nur für Küchenutensilien mit bestimmten Beschreibungs-Datenelementen zulassen. Wenn von dem Induktionskochfeld detektiert wird, dass anstelle des erfindungsgemäßen Küchenutensils beispielsweise ein nicht temperaturreduziertes Küchenutensil auf dem Induktionskochfeld aufgestellt worden ist, wird beispielsweise ein spezieller, besonders schonender Betriebsmodus gewählt, bei dem zum Beispiel die Leistung der Induktionsspule des Induktionskochfelds und/oder eine maximale Betriebsdauer dieser Induktionsspule begrenzt werden/wird, weil ein Schutz der Arbeitsplatte nur über relativ träge reagierende Temperatursensoren unter der Arbeitsplatte gewährleistet werden kann. Es ist ferner möglich, dass ein Induktionskochfeld auf einer Kochzone des Induktionskochfelds oder für ein erfindungsgemäßes Küchenutensil auf einem als Flächenkochfeld ausgebildeten Induktionskochfeld in dem ersten Betriebsmodus und gleichzeitig für eine andere Kochzone des Induktionskochfelds oder für ein anderes Küchenutensil in einem zweiten Betriebsmodus automatisch betrieben wird. Für den Fall, dass ein in einem ersten Betriebsmodus des Induktionskochfelds betreibbares erfindungsgemäßes Küchenutensil und ein andersartiges Küchenutensil, beispielsweise ein nicht gedämmtes Gargeschirr, gleichzeitig auf derselben Induktionsspule eines als Flächenkochfeld ausgebildeten Induktionskochfelds stehen, kann sowohl für das vorgenannte erfindungsgemäße Küchenutensil mit einer diesem zugeordneten ersten erlaubten Maximalleistung dieser Induktionsspule einerseits und das vorgenannte Gargeschirr mit einer im Vergleich zu der ersten erlaubten Maximalleistung niedrigeren zweiten erlaubten Maximalleistung dieser Induktionsspule andererseits ein gemeinsamer Hybridmodus zum Betrieb dieser Induktionsspule des Induktionskochfelds vorgesehen sein, der zum Beispiel, aus Sicherheitsgründen, lediglich die zweite erlaubte Maximalleistung der Induktionsspule zulässt.

Vier Ausführungsbeispiele der Erfindung sind in den Zeichnungen rein schematisch dargestellt und werden nachfolgend näher beschrieben. Es zeigt
- Figur 1: ein erstes Ausführungsbeispiel des erfindungsgemäßen Küchenutensils zur Durchführung mindestens eines der erfindungsgemäßen Verfahren in einer geschnittenen Seitenansicht, in teilweiser Darstellung,
- Figur 2: das erste Ausführungsbeispiel in einer geschnittenen Seitenansicht,
- Figur 3: ein zweites Ausführungsbeispiel des erfindungsgemäßen Küchenutensils zur Durchführung mindestens eines der erfindungsgemäßen Verfahren in einer geschnittenen Seitenansicht,
- Figur 4: ein drittes Ausführungsbeispiel des erfindungsgemäßen Küchenutensils zur Durchführung mindestens eines der erfindungsgemäßen Verfahren in einer geschnittenen Seitenansicht, in teilweiser Darstellung,
- Figur 5: das dritte Ausführungsbeispiel in einer geschnittenen Seitenansicht und
- Figur 6: ein viertes Ausführungsbeispiel des erfindungsgemäßen Küchenutensils zur Durchführung mindestens eines der erfindungsgemäßen Verfahren in einer geschnittenen Seitenansicht.

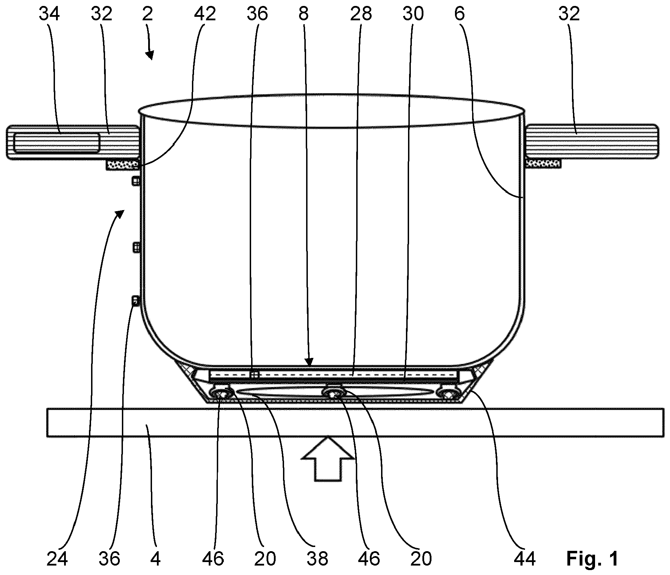

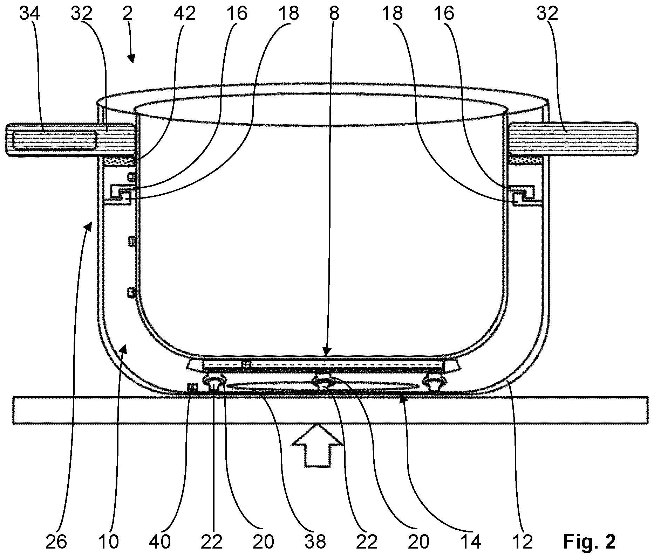

In den Fig. 1 und 2 ist ein erstes Ausführungsbeispiel des erfindungsgemäßen Küchenutensils rein exemplarisch dargestellt.

Das Küchenutensil 2 zum Aufstellen auf ein Induktionskochfeld 4 ist als ein Kochtopf ausgebildet und umfasst eine Innenschale 6 mit einem Innenboden 8 und eine von der Innenschale 6 durch einen Zwischenraum 10 beabstandete Außenschale 12 mit einem Außenboden 14, wobei die Innenschale 6 und die Außenschale 12 zueinander korrespondierende mechanische Verbindungsmittel 16, 18 und 20, 22 zur mechanischen Verbindung der Innenschale 6 mit der Außenschale 12 in einer in der Fig. 2 dargestellten mechanischen Verbindungslage des Küchenutensils 2 aufweisen. In der Fig. 1 sind lediglich die mechanischen Verbindungsmittel 20 dargestellt. Die zueinander korrespondierenden mechanischen Verbindungsmittel 16, 18 sowie die zu den mechanischen Verbindungsmitteln 20 korrespondierenden mechanischen Verbindungsmittel 22 sind lediglich in der Fig. 2 gezeigt. Die zueinander korrespondierenden mechanischen Verbindungsmittel 16, 18 und 20, 22 sind bei dem vorliegenden Ausführungsbeispiel zur lösbaren mechanischen Verbindung der Innenschale 6 und der Außenschale 12 ausgebildet, wobei die zueinander korrespondierenden mechanischen Verbindungsmittel 16, 18 und 20, 22 einerseits an dem Innenboden 6 und an dem Außenboden 14 und andererseits an einer Innenwand 24 der Innenschale 6 und an einer der Innenwand 24 gegenüberliegend angeordneten Außenwand 26 der Außenschale 12 angeordnet sind. Die zueinander korrespondierenden mechanischen Verbindungsmittel 16, 18 und 20, 22 sind bei dem vorliegenden Ausführungsbeispiel als zueinander korrespondierende Rastmittel ausgebildet. In anderen Ausführungsformen der Erfindung ist es alternativ oder zusätzlich dazu auch möglich, dass die zueinander korrespondierenden mechanischen Verbindungsmittel an einem freien Innenrand der Innenschale und an einem freien Außenrand der Außenschale und/oder an mindestens einem Griff des Küchenutensils und an einem zu dem Griff korrespondierenden mindestens einen Griffbefestigungselement, angeordnet sind.

Bei dem vorliegenden Ausführungsbeispiel sind die an dem Innenboden 8 angeordneten mechanischen Verbindungsmittel 20 an einer an dem Innenboden 8 mittels einer induktiven Heizvorrichtung 28 des Küchenutensils 2 mittelbar befestigten Verbindungsplatte 30 angeordnet.

Die induktive Heizvorrichtung 28 ist zwischen dem Innenboden 8 und dem Außenboden 14 mit Abstand zu der Außenschale 12 wärmeleitend an dem Innenboden 8 angeordnet, wobei die induktive Heizvorrichtung 28 in einer in den Fig. 1 und 2 dargestellten Aufstelllage des Küchenutensils 2 auf dem Induktionskochfeld 4 mittelbar und/oder unmittelbar mit einer nicht dargestellten Induktionsspule des Induktionskochfelds 4 induktiv koppelbar ist. In anderen Ausführungsformen der Erfindung ist es auch denkbar, dass die induktive Heizvorrichtung eine mit dem Innenboden wärmeleitend verbundene Wärmeverteilschicht und eine auf der dem Innenboden abgewandten Seite der Wärmeverteilschicht an der Wärmeverteilschicht wärmeleitend angeordnete und zu dem Außenboden beabstandete Wärmeerzeugungsschicht aufweist, wobei die Wärmeerzeugungsschicht in der Aufstelllage des Küchenutensils auf dem Induktionskochfeld mittelbar und/oder unmittelbar mit einer Induktionsspule des Induktionskochfelds induktiv koppelbar ist.

An der Innenschale 6 sind ferner zwei Griffe 32 zur Handhabung des Küchenutensils 2 befestigt, wobei in dem in der jeweiligen Bildebene der Fig. 1 und 2 links dargestellten Griff 32 eine Elektronik 34 zur Steuerung oder Regelung des Küchenutensils 2 integriert ist.

Das Küchenutensil 2 ist erfindungsgemäß derart ausgebildet, dass die Innenschale 6 und die Außenschale 12 jeweils mindestens ein elektrisches Bauteil umfassen, wobei die Innenschale 6 und die Außenschale 12 zueinander korrespondierende elektrische Verbindungsmittel zur zumindest teilweisen drahtlosen oder drahtgebundenen elektrischen Verbindung der elektrischen Bauteile der Innenschale 6 und der Außenschale 12 in einer in der Fig. 2 dargestellten elektrischen Verbindungslage des Küchenutensils 2 aufweisen. Das mindestens eine elektrische Bauteil der Innenschale 6 umfasst die folgenden elektrischen Bauteile: Die in einem der Griffe 32 integrierte Elektronik 34 zur Steuerung oder Regelung des Küchenutensils 2, insgesamt drei als Temperatursensoren 36 ausgebildete und über eine Höhe der Innenwand 24 verteilt angeordnete Sensoren sowie einen als Temperatursensor 36 ausgebildeten und an dem Innenboden 8 angeordneten Sensor zur Erfassung jeweils eines Küchenutensilparameters, nämlich einer Temperatur der Innenschale 6, des Küchenutensils 2, die induktiv betriebene Heizvorrichtung 28 zur Erwärmung des Küchenutensils und somit eines in der Innenschale 6 befindlichen, nicht dargestellten Garguts, eine für das sogenannte Energy-Harvesting geeignet ausgebildete Induktionsspule 38 zur Energieversorgung der Elektronik 34 des Küchenutensils 2. Ferner kann die Innenschale in anderen Ausführungsformen der Erfindung alternativ oder zusätzlich dazu noch weitere elektrische Bauteile, beispielsweise mindestens einen Sensor zur Erfassung eines weiteren Küchenutensilparameters des Küchenutensils und/oder Spulen oder Antennen zur Signalübertragung zwischen der Innenschale und der Außenschale und/oder zwischen dem Küchenutensil und dem Induktionskochfeld und/oder zwischen dem Küchenutensil und einem dritten Gerät und/oder eine widerstandsbasierte Heizeinrichtung, aufweisen. Das mindestens eine elektrische Bauteil der Außenschale 12 umfasst als elektrisches Bauteil einen als Temperatursensor 40 ausgebildeten und an dem Außenboden 14 angeordneten Sensor zur Erfassung eines als Temperatur der Außenschale 12, nämlich des Außenbodens 14, ausgebildeten Küchenutensilparameters des Küchenutensils 2. Analog zu der Innenschale kann auch die Außenschale in anderen Ausführungsformen der Erfindung alternativ oder zusätzlich weitere elektrische Bauteile, wie beispielsweise eine Elektronik zur Steuerung oder Regelung des Küchenutensils, Elektronik zur Aufnahme und/oder Verarbeitung und/oder Übermittlung von Messwerten und/oder Daten und/oder Steuer- und/oder Regelparametern, mindestens einen Sensor zur Erfassung eines weiteren Küchenutensilparameters des Küchenutensils, eine Induktionsspule zur indirekten Erwärmung eines in der Innenschale befindlichen Garguts, eine Induktionsspule zur Energieversorgung der vorgenannten Elektronik des Küchenutensils und/oder eines mit der Innenschale verbundenen Heizelements, sowie Spulen oder Antennen zur Signalübertragung zwischen der Innenschale und der Außenschale und/oder zwischen dem Küchenutensil und dem Induktionskochfeld und/oder zwischen dem Küchenutensil und einem dritten Gerät.

Die vorgenannten elektrischen Verbindungsmittel umfassen hier eine mit der Elektronik 34 signalübertragend verbundene Empfangseinheit 42. Die vorgenannten elektrischen Bauteile 28, 36, 38 und 40 der Innenschale 6 und der Außenschale 12 sind in der elektrischen Verbindungslage des Küchenutensils 2 jeweils mittels einer nicht dargestellten Sendeeinheit mit der Empfangseinheit 42 drahtlos signalübertragend verbunden.

Die mechanischen Verbindungsmittel 16, 18 und 20, 22 sowie die elektrischen Verbindungsmittel sind hier derart ausgebildet und angeordnet, dass die mechanische und die elektrische Verbindungslage während einer Fertigung des Küchenutensils 2 in einem einzigen Fertigungsschritt herstellbar sind, wobei die elektrische Verbindungslage bei dem vorliegenden Ausführungsbeispiel der mechanischen Verbindungslage entspricht.

Die Innenschale 6 des Küchenutensils 2 ist auch ohne die Außenschale 12 auf das Induktionskochfeld 4 aufstellbar und mittels der nicht dargestellten Induktionsspule des Induktionskochfelds 4 auf dem Fachmann bekannte Weise erwärmbar. Wie aus der Fig. 1 ersichtlich ist, kann die Innenschale 6 gemäß dem vorliegenden Ausführungsbeispiel hierfür mit einer Bodenabdeckung 44 abgedeckt werden. Zur lösbaren Befestigung der Bodenabdeckung 44 an der Innenschale 6 weist die Bodenabdeckung 44 zu den mechanischen Verbindungsmitteln 20 der Innenschale 6 korrespondierende mechanische Verbindungsmittel 46 auf. Entsprechend kann die Bodenabdeckung 44 analog zu der Außenschale 12 an dem Innenboden 8 der Innenschale 6 befestigt werden.

Das Vorhandensein der mechanischen und/oder elektrischen Verbindungslage des Küchenutensils 2 wird bei dem vorliegenden Ausführungsbeispiel mittels der Elektronik 34 des Küchenutensils 2 automatisch detektiert und die miteinander elektrisch verbundenen elektrischen Bauteile der elektrischen Bauteile der Innenschale 6 und der Außenschale 12 werden in Abhängigkeit des Vorhandenseins der elektrischen Verbindungslage des Küchenutensils 2 mittels der Elektronik 34 des Küchenutensils 2 aufeinander abgestimmt angesteuert und ausgewertet. Bei dem vorliegenden Ausführungsbeispiel sind die Temperatursensoren 36 und 40 der Innenschale 6 und der Außenschale 12 als die vorgenannten miteinander elektrisch verbundenen elektrischen Bauteile ausgebildet. In diesem Fall wird das Vorhandensein der elektrischen Verbindungslage des Küchenutensils 2 mittels der Elektronik 34 des Küchenutensils 2 automatisch detektiert und das Küchenutensil 2 mit der Innenschale 6 wird mittels der Elektronik 34 des Küchenutensils 2 in einem ersten Betriebsmodus betrieben. Dabei werden die in der elektrischen Verbindungslage miteinander elektrisch verbundenen elektrischen Bauteile der Innenschale 6 und der Außenschale 12 mittels der Elektronik 34 des Küchenutensils 2 derart angesteuert, dass die miteinander elektrisch verbundenen elektrischen Bauteile, beispielsweise die vorgenannten Temperatursensoren 36 und 40, zumindest teilweise in Kombination miteinander betrieben werden und/oder zumindest teilweise zum einen aktiviert und zum anderen deaktiviert werden. Siehe hierzu auch die beispielhaften Ausführungen in der Beschreibungseinleitung.

Wie aus den obigen Erläuterungen in Verbindung mit der Fig. 1 ersichtlich ist, ist die Innenschale 6 auch ohne die Außenschale 12 auf das Induktionskochfeld 4 aufstellbar und auf dem Fachmann an sich bekannte Weise induktiv betreibbar. In diesem Fall wird das Nicht-Vorhandensein der mechanischen und/oder elektrischen Verbindungslage des Küchenutensils 2 mittels der Elektronik 34 der Innenschale 6 automatisch detektiert und die Innenschale 6 mittels der Elektronik 34 der Innenschale 6 in einem zweiten Betriebsmodus betrieben.

Alternativ oder zusätzlich dazu ist es auch denkbar, dass das Vorhandensein der mechanischen und/oder elektrischen Verbindungslage des Küchenutensils 2 mittels einer nicht dargestellten Elektronik des Induktionskochfelds 4 und/oder mittels der mit der Elektronik des Induktionskochfelds 4 signalübertragend verbundenen Elektronik 34 des Küchenutensils 2 automatisch detektiert wird und das Induktionskochfeld 4 in Abhängigkeit des Vorhandenseins der mechanischen und/oder elektrischen Verbindungslage des Küchenutensils 2 mittels der Elektronik des Induktionskochfelds 4 in einem ersten Betriebsmodus betrieben wird, wenn das Vorhandensein der mechanischen und/oder elektrischen Verbindungslage detektiert worden ist, und mittels der Elektronik des Induktionskochfelds 4 in einem zweiten Betriebsmodus betrieben wird, wenn das Vorhandensein der mechanischen und/oder elektrischen Verbindungslage nicht detektiert worden ist.

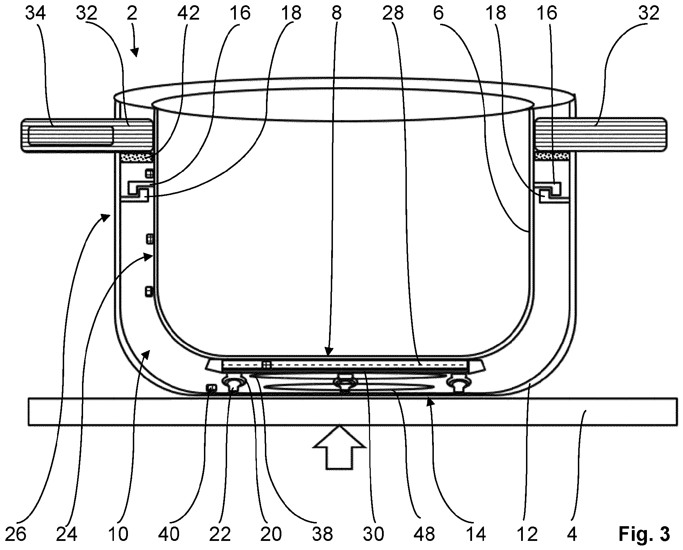

In den Fig. 3 bis 6 sind drei weitere Ausführungsbeispiele des erfindungsgemäßen Küchenutensils dargestellt. Diese Ausführungsbeispiele werden nachfolgend lediglich im Umfang der Unterschiede zu den jeweils vorangegangenen Ausführungsbeispielen erläutert. Ansonsten wird auf die vorherigen Ausführungen, insbesondere auf die Ausführungen zu dem oben erläuterten ersten Ausführungsbeispiel, verwiesen. Gleiche oder gleichwirkende Bauteile sind in den Fig. 1 bis 6 mit den gleichen Bezugszeichen versehen.

In der Fig. 3 ist ein zweites Ausführungsbeispiel des erfindungsgemäßen Küchenutensils dargestellt. Im Unterschied zu dem oben erläuterten ersten Ausführungsbeispiel gemäß der Fig. 1 und 2 ist bei dem vorliegenden Ausführungsbeispiel an der Außenschale 12 eine weitere für das sogenannte Energy-Harvesting geeignet ausgebildete Induktionsspule 48 als ein zusätzliches elektrisches Bauteil der Außenschale 12 angeordnet. Analog zu den oben erläuterten elektrischen Bauteilen der Innenschale 6 und der Außenschale 12 ist auch diese weitere Induktionsspule 48 signalübertragend mit der Elektronik 34 verbunden. Denkbar ist beispielsweise, dass in dem ersten Betriebsmodus des Küchenutensils 2 die an der Außenspule 12 angeordnete Induktionsspule 48 für das Energy-Harvesting verwendet wird, während in dem zweiten Betriebsmodus des Küchenutensils 2 die an der Innenspule 6 angeordnete Induktionsspule 38 für das Energy-Harvesting verwendet wird. Möglich ist aber auch, dass in dem ersten Betriebsmodus des Küchenutensils 2 beide Induktionsspulen 38, 48 für das Energy-Harvesting verwendet werden. Ansonsten entspricht das zweite Ausführungsbeispiel dem ersten Ausführungsbeispiel.

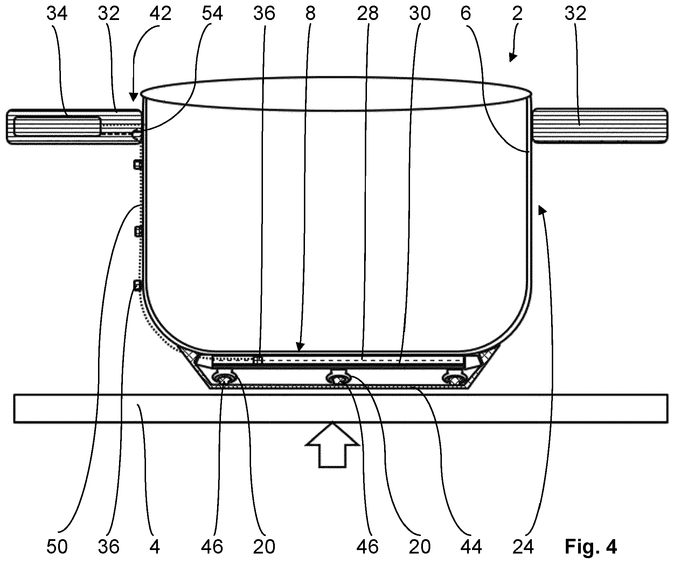

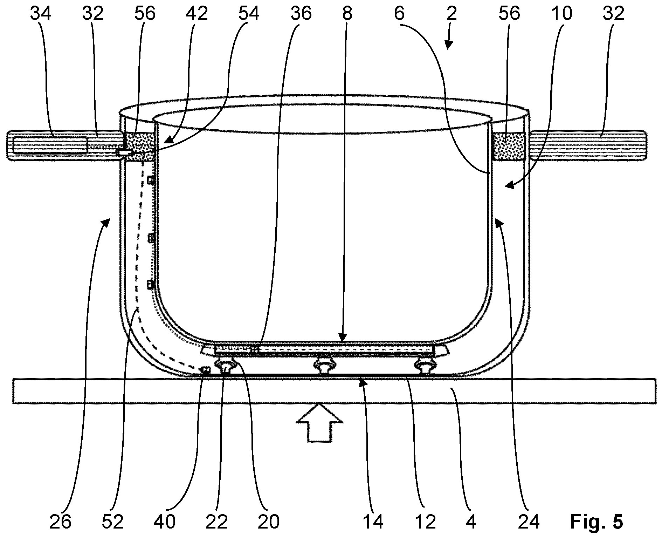

Das in den Fig. 4 und 5 dargestellte dritte Ausführungsbeispiel entspricht ebenfalls weitgehend dem ersten Ausführungsbeispiel gemäß der Fig. 1 und 2. Anstelle einer drahtlosen signalübertragenden Verbindung zwischen den einzelnen Temperatursensoren 36, 40 sind die Temperatursensoren 36, 40 bei dem vorliegenden Ausführungsbeispiel jedoch drahtgebunden, also mittels elektrischer Verbindungskabel 50, 52, mit der Elektronik 34 signalübertragend verbunden. Zwecks elektrisch leitendem Anschluss der Verbindungskabel 50, 52 an die Elektronik 34 weist die in einem der Griffe 32 integrierte Elektronik 34 ein Anschlusselement 54 auf. Ferner umfasst das vorliegende Ausführungsbeispiel im Unterschied zu dem ersten Ausführungsbeispiel lediglich noch die an der Innenschale 6 angeordnete und als induktive Heizvorrichtung 28 ausgebildete Induktionsspule. Anders als bei dem ersten und dem zweiten Ausführungsbeispiel sind die Griffe 32 des Küchenutensils 2 bei einem Gebrauch der Innenschale 6 ohne die Außenschale 12 direkt an der Innenschale 6 befestigt, während die Griffe 32 bei einem Gebrauch der Innenschale 6 mit der Außenschale 12 mit Abstandhaltern 56 derart radial nach Außen verschoben an der Innenschale 6 befestigt sind, dass das vorgenannte Anschlusselement 54 auch zum signalübertragenden Anschluss des an der Außenschale 12 angeordneten Temperatursensors 40 geeignet positioniert ist. Die an der Innenwand 24 und an der Außenwand 26 zueinander korrespondierend ausgebildeten mechanischen Verbindungsmittel sind hier als die Griffe 32 des Küchenutensils 2 und als zu den Griffen 32 korrespondierende, nicht dargestellte Griffbefestigungselemente ausgebildet.

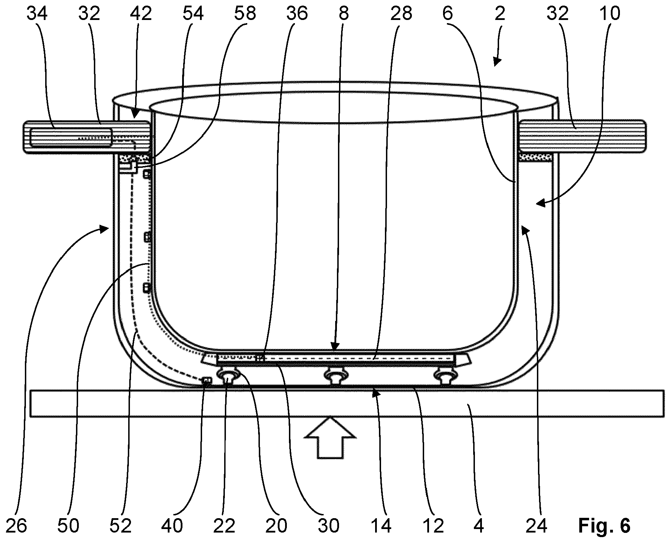

Das vierte Ausführungsbeispiel gemäß der Fig. 6 ist ähnlich dem dritten Ausführungsbeispiel gemäß der Fig. 4 und 5 ausgebildet. Im Unterschied dazu ist das Anschlusselement 54 bei dem vorliegenden Ausführungsbeispiel derart positioniert, dass das zu dem an der Außenschale 12 angeordneten Temperatursensor 40 korrespondierende Verbindungskabel 52 bei dem Fügen der Außenschale 12 mit der Innenschale 6 selbsttätig das Anschlusselement 54 signalübertragend kontaktiert. Hierfür ist an der Außenschale 12 ein weiteres elektrisches Anschlusselement 58 angeordnet, das mit dem Verbindungskabel 52 elektrisch leitend verbunden ist und bei dem vorgenannten Fügen mit dem Anschlusselement 54 in Eingriff gelangt. Aufgrund der vorgenannten Ausbildung ist die Verwendung von Abstandhaltern 56 gemäß dem dritten Ausführungsbeispiel hier nicht erforderlich.

Die Erfindung ist nicht auf die vorliegenden Ausführungsbeispiele beschränkt. Siehe hierzu beispielsweise die diesbezüglichen Ausführungen in der Beschreibungseinleitung.

Insbesondere ist das erfindungsgemäße Küchenutensil nicht auf die konstruktiven und fertigungstechnischen Details der Ausführungsbeispiele begrenzt.

Im Unterschied zu den erläuterten Ausführungsbeispielen ist es beispielsweise denkbar, dass die zueinander korrespondierenden mechanischen Verbindungsmittel zumindest teilweise als auf Magnetkraft basierende Verbindungsmittel und/oder als auf Vakuum basierende Verbindungsmittel, bevorzugt als auf ein in dem Zwischenraum ausgebildetes Vakuum basierende Verbindungsmittel, und/oder als auf Klebekraft basierende Verbindungsmittel ausgebildet sind. Ferner ist es möglich, dass an der Außenschale und/oder in dem Zwischenraum mindestens ein Ferritkörper zur mittelbaren induktiven Kopplung der induktiven Heizvorrichtung mit einer Induktionsspule des Induktionskochfelds in einer Aufstelllage des Küchenutensils auf dem Induktionskochfeld angeordnet ist.

## Patentansprüche

1. Küchenutensil (2) zum Aufstellen auf ein Induktionskochfeld (4), umfassend eine Innenschale (6) mit einem Innenboden (8) und eine von der Innenschale (6) durch einen Zwischenraum (10) beabstandete Außenschale (12) mit einem Außenboden (14), wobei die Innenschale (6) und die Außenschale (12) zueinander korrespondierende mechanische Verbindungsmittel (16, 18, 20, 22) zur mechanischen Verbindung der Innenschale (6) mit der Außenschale (12) in einer mechanischen Verbindungslage des Küchenutensils (2) aufweisen und das Küchenutensil (2) derart ausgebildet ist, dass die Innenschale (6) bei auf dem Induktionskochfeld (4) aufgestellten Küchenutensil (2) mittels einer Induktionsspule des Induktionskochfelds (4) erwärmbar ist, **dadurch gekennzeichnet, dass** die Innenschale (6) und die Außenschale (12) jeweils mindestens ein elektrisches Bauteil (28, 34, 36, 38, 40; 28, 34, 36, 38, 40, 48; 28, 36, 40) umfassen, wobei die Innenschale (6) und die Außenschale (12) zueinander korrespondierende elektrische Verbindungsmittel zur zumindest teilweisen drahtlosen und/oder drahtgebundenen elektrischen Verbindung der elektrischen Bauteile (28, 34, 36, 38, 40; 28, 34, 36, 38, 40, 48; 28, 36, 40) der Innenschale (6) und der Außenschale (12) in einer elektrischen Verbindungslage des Küchenutensils (2) aufweisen.

2. Küchenutensil (2) nach Anspruch 1, **dadurch gekennzeichnet, dass** die zueinander korrespondierenden mechanischen Verbindungsmittel (16, 18, 20, 22) zur lösbaren mechanischen Verbindung der Innenschale (6) und der Außenschale (12) ausgebildet sind, bevorzugt, dass die zueinander korrespondierenden mechanischen Verbindungsmittel (16, 18, 20, 22) zumindest teilweise an dem Innenboden (8) und an dem Außenboden (14) angeordnet sind, besonders bevorzugt, dass die an dem Innenboden (8) angeordneten mechanischen Verbindungsmittel (20) an einer an dem Innenboden (8) mittelbar oder unmittelbar befestigten Verbindungsplatte (30) angeordnet sind.

3. Küchenutensil (2) nach Anspruch 2, **dadurch gekennzeichnet, dass** die zueinander korrespondierenden mechanischen Verbindungsmittel (16, 18, 20, 22) zumindest teilweise an einer Innenwand (24) der Innenschale (6) und an einer der Innenwand (24) gegenüberliegend angeordneten Außenwand (26) der Außenschale (12), bevorzugt an einem freien Innenrand der Innenschale und an einem freien Außenrand der Außenschale und/oder an mindestens einem Griff des Küchenutensils und an einem zu dem Griff korrespondierenden mindestens einen Griffbefestigungselement, angeordnet sind.

4. Küchenutensil (2) nach einem der Ansprüche 1 bis 3, **dadurch gekennzeichnet, dass** die mechanischen und elektrischen Verbindungsmittel (16, 18, 20, 22) derart ausgebildet und angeordnet sind, dass die mechanische und die elektrische Verbindungslage während einer Fertigung des Küchenutensils (2) in einem einzigen Fertigungsschritt herstellbar sind, bevorzugt, dass die elektrische Verbindungslage der mechanischen Verbindungslage entspricht.

5. Küchenutensil nach einem der Ansprüche 1 bis 4, **dadurch gekennzeichnet, dass** die zueinander korrespondierenden mechanischen Verbindungsmittel zumindest teilweise als auf Magnetkraft basierende Verbindungsmittel und/oder als auf Vakuum basierende Verbindungsmittel, bevorzugt als auf ein in dem Zwischenraum ausgebildetes Vakuum basierende Verbindungsmittel, und/oder als auf Klebekraft basierende Verbindungsmittel ausgebildet sind.

6. Küchenutensil (2) nach einem der Ansprüche 1 bis 5, **dadurch gekennzeichnet, dass** das mindestens eine elektrische Bauteil der Innenschale (6) und/oder das mindestens eine elektrische Bauteil der Außenschale (12) als ein elektrisches Bauteil aus der nachfolgenden Gruppe ausgewählt ist: Elektronik (34) zur Steuerung oder Regelung des Küchenutensils (2), Elektronik zur Aufnahme und/oder Verarbeitung und/oder Übermittlung von Messwerten und/oder Daten und/oder Steuer- und/oder Regelparametern, Sensor zur Erfassung eines Küchenutensilparameters des Küchenutensils (2), induktives oder resistives Heizelement zur Erwärmung eines in der Innenschale (6) befindlichen Garguts, Induktionsspule (38; 38, 48) zur Energieversorgung einer Elektronik (34) des Küchenutensils (2), Induktionsspule zur Energieversorgung eines Heizelements, Spule oder Antenne zur Signalübertragung zwischen der Innenschale und der Außenschale und/oder zwischen dem Küchenutensil und dem Induktionskochfeld und/oder zwischen dem Küchenutensil und einem weiteren Gerät.

7. Küchenutensil (2) nach einem der Ansprüche 1 bis 6, **dadurch gekennzeichnet, dass** zwischen dem Innenboden (8) und dem Außenboden (14) mit Abstand zu der Außenschale (12) eine induktive Heizvorrichtung (28) wärmeleitend an dem Innenboden (8) angeordnet ist, wobei die induktive Heizvorrichtung (28) in einer Aufstelllage des Küchenutensils (2) auf dem Induktionskochfeld (4) mittelbar und/oder unmittelbar mit einer Induktionsspule des Induktionskochfelds (4) induktiv koppelbar ist, bevorzugt, dass die induktive Heizvorrichtung eine mit dem Innenboden wärmeleitend verbundene Wärmeverteilschicht und eine auf der dem Innenboden abgewandten Seite der Wärmeverteilschicht an der Wärmeverteilschicht wärmeleitend angeordnete und zu dem Außenboden beabstandete Wärmeerzeugungsschicht aufweist, wobei die Wärmeerzeugungsschicht in der Aufstelllage des Küchenutensils auf dem Induktionskochfeld mittelbar und/oder unmittelbar mit einer Induktionsspule des Induktionskochfelds induktiv koppelbar ist.

8. Küchenutensil nach Anspruch 7, **dadurch gekennzeichnet, dass** an der Außenschale und/oder in dem Zwischenraum mindestens ein Ferritkörper zur mittelbaren induktiven Kopplung der induktiven Heizvorrichtung mit einer Induktionsspule des Induktionskochfelds in einer Aufstelllage des Küchenutensils auf dem Induktionskochfeld angeordnet ist.

9. Verfahren zum Betrieb des Küchenutensils (2) nach einem der Ansprüche 1 bis 8, wonach das Vorhandensein der mechanischen und/oder elektrischen Verbindungslage des Küchenutensils (2) mittels einer Elektronik (34) des Küchenutensils (2) automatisch detektiert wird und die miteinander elektrisch verbundenen elektrischen Bauteile der Innenschale (6) und der Außenschale (12) in Abhängigkeit des Vorhandenseins der elektrischen Verbindungslage des Küchenutensils (2) mittels der Elektronik (34) des Küchenutensils (2) aufeinander abgestimmt angesteuert und/oder ausgewertet werden.

10. Verfahren nach Anspruch 9, **dadurch gekennzeichnet, dass** miteinander elektrisch verbundene elektrische Bauteile der Innenschale (6) und der Außenschale (12) mittels der Elektronik (34) des Küchenutensils (2) derart angesteuert werden, dass die miteinander elektrisch verbundenen elektrischen Bauteile zumindest teilweise in Kombination miteinander betrieben werden und/oder zumindest teilweise zum einen aktiviert und zum anderen deaktiviert werden.

11. Verfahren zum Betrieb der Innenschale (6) des Küchenutensils (2) nach einem der Ansprüche 1 bis 8, wonach das Vorhandensein der mechanischen und/oder elektrischen Verbindungslage des Küchenutensils (2) mittels einer Elektronik (34) des Küchenutensils (2) automatisch detektiert wird und das Küchenutensil (2) mit der Innenschale (6) mittels der Elektronik (34) des Küchenutensils (2) in einem ersten Betriebsmodus betrieben wird, wenn das Vorhandensein der mechanischen und/oder elektrischen Verbindungslage detektiert worden ist, und die Innenschale (6) mittels einer Elektronik (34) der Innenschale (6) in einem zweiten Betriebsmodus betrieben wird, wenn das Vorhandensein der mechanischen und/oder elektrischen Verbindungslage nicht detektiert worden ist.

12. Verfahren zum Betrieb eines Systems, umfassend ein Induktionskochfeld (4) und das Küchenutensil (2) nach einem der Ansprüche 1 bis 8, wonach das Vorhandensein der mechanischen und/oder elektrischen Verbindungslage des Küchenutensils (2) mittels einer Elektronik des Induktionskochfelds (4) und/oder mittels einer mit der Elektronik des Induktionskochfelds signalübertragend verbundenen Elektronik (34) des Küchenutensils (2) automatisch detektiert wird und das Induktionskochfeld (4) in Abhängigkeit des Vorhandenseins der mechanischen und/oder elektrischen Verbindungslage des Küchenutensils (2) mittels der Elektronik des Induktionskochfelds in einem ersten Betriebsmodus betrieben wird, wenn das Vorhandensein der mechanischen und/oder elektrischen Verbindungslage detektiert worden ist, und mittels der Elektronik des Induktionskochfelds in einem zweiten Betriebsmodus betrieben wird, wenn das Vorhandensein der mechanischen und/oder elektrischen Verbindungslage nicht detektiert worden ist.
